# EUROPEAN PATENT APPLICATION

(11) **EP 4 390 370 A1**
(43) Date of publication of application: **26.06.2024**
(21) Application number: 23160138.6
(22) Date of filing: 06.03.2023
(51) Int. Cl.: G01N 17/00, G01N 27/04, G01N 17/04

(54) **SYSTEM FOR DETECTING A DEGRADATION IN A PROTECTIVE COATING AND ASSOCIATED METHOD**

(30) Priority: 20.12.2022 IN 202241073968
(71) Applicant: Henkel AG & Co. KGaA, 40589 Düsseldorf (DE)
(72) Inventor: Tathe, Dipak, 443401 Maharashtra (IN); Shah, Jayesh P, 411001 Pune (IN)

(57) **Abstract**

The invention provides a system configured for detecting a degradation in a protective coating of the system and an associated method. The protective coating comprises
- a lower coating portion arranged on a substrate to be coated;
- a first upper coating portion arranged on the lower coating portion;
- a first electrically conductive pattern arranged inside the protective coating between the lower coating potion and the first upper coating portion. The system further comprises a resistance measurement device configured to electrically connect with the electrically conductive pattern to measure the resistance across the pattern. A degradation of the first upper coating that exposes at least a portion of the pattern is detected in the form of a change in the resistance measured across the pattern.

## Description

### TECHNICAL FIELD

The invention pertains to the field of erosion monitoring of coatings. More particularly the invention can be used in industrial applications in which assets can be subject to degradation due for example to erosion or other hazards affecting their external coating. The invention can detect the occurrence of such degradations to plan an appropriate corrective maintenance action.

### TECHNOLOGICAL BACKGROUND

Monitoring of the condition of industrial assets is important to ensure appropriate maintenance steps can be implemented before a breakage occurs. When an industrial asset such as a pump, a pipe, a flange or any other piece of machinery or infrastructure is subject to wear and tear, signs of aging are not easy to detect on a daily basis. However, when such aging creates a malfunction, it can compromise an entire production line and lead to very costly maintenance and repair steps.

In order to overcome this risk, it is now customary to regularly plan inspections of assets and also to conduct stress tests to make sure the assets are in a good operation state. While such inspections do reduce the risk of malfunction they cannot prevent malfunction from occurring in between inspections and the inspections themselves are prone to the subjective assessment of a technician.

Another means to monitor the condition of an asset consists in placing dedicated sensors at locations prone to an increased risk of failure. Sensors may monitor the vibrations registered on the asset, sounds produced by the asset in use, mechanical deformations of the asset or be sensitive to leaks from the asset. An issue with the use of such dedicated sensors is that they require an educated strategic placement of the sensor on the asset and that the detection of a malfunction is only possible locally.

Assets are generally protected by a protective coating which is the first element that will degrade over time and expose the asset to increased risks of breakage or malfunction.

For the above reasons, a device and method for detecting a degradation in a protective coating is sought.

### SUMMARY OF THE INVENTION

To address the above need, the invention provides a system configured for detecting a degradation in a protective coating comprised in the system, the protective coating comprising:
- a lower coating portion, configured to be arranged on a substrate to be coated;
- a first upper coating portion arranged on the lower coating portion;
- a first electrically conductive pattern arranged inside the protective coating between the lower coating potion and the first upper coating portion;
wherein the system further comprises a resistance measurement device configured to electrically connect with the first electrically conductive pattern to measure the resistance across the first electrically conductive pattern, wherein a degradation of the first upper coating that exposes at least a portion of the first electrically conductive pattern is detected in the form of a change in the resistance measured across the first electrically conductive pattern.

The system mentioned above provides several advantages over the detection techniques of the prior art. First of all, the use of an electrically conductive pattern is cheaper to implement than the use of a dedicated sensor placed on the protective coating. Then, the use of such an integrated electrically conductive pattern acting as a sensing means to detect erosion also allows the monitoring of an erosion over an extended surface at low cost. Indeed, the use of a pattern, be it a line, a mesh of lines or another type of patterns enables a precise detection of the location at which an erosion is affecting the electrical resistance of the monitoring system of the invention. Finally, the system of the invention is also very easy to repair as it does not involve complex materials. A pro-active monitoring and repair of the protective coating and consequently of the asset that the coating typically protects can therefore be easily implemented.

It is to be understood that the lower coating portion and the first upper coating portion can be made of the same material or a different material such a ceramic-filled epoxy or other coating materials.

The electrically conductive pattern can be a simple line or regular shaped surface or a more complex structure involving several lines or stripes that intersect, optionally at different angles, to allow a more accurate detection of the location of an erosion.

The resistance measurement device can be a device formed of different resistance measurement units each connected to a different element of the electrically conductive pattern.

According to an embodiment, the protective coating further comprises:
- a second upper coating portion arranged on the first upper coating portion;
- a second electrically conductive pattern arranged between the first upper coating portion and the second upper coating portion.

The use of a stack of coatings separated by electrically conductive patterns provides a more precise insight into the depth of the erosion or corrosion that affects the protective coating. It may be advantageous to also use such an arrangement to monitor the progression of a deterioration of the protective coating over time, which can for example help in determining an appropriate repair action based on the urgency of the degradation. Some repair actions may be more time consuming than others and require more planning. This stack arrangement informs the user of the occurrence and speed of progression of the degradation so that the repair actions can be planned in due course before an extensive degradation occurs.

According to an embodiment, the first electrically conductive pattern and/or the second electrically conductive pattern comprise at least one electrically conductive structure type selected among : a conductive surface, a conductive wire, a conductive stripe, a set of parallel conductive wires, a set of parallel conductive stripes, a set of parallel stripes each comprising a set of parallel conductive wires.

The use of wires or stripes is particularly convenient because they can carry a low amount of current and are easy to place into a system such as that of the invention. The wires or stripes can also be arranged in such a pattern that they cover substantially the full surface of the protective coating that is monitored. The stripes of wires can be arranged in a parallel fashion. Each wire or stripe can also be made of a multitude of parallel conductive fibers. The advantage of such composite conductive structures is that they themselves degrade progressively once the upper coating layer is eroded and exposes the conductive structure. In that way, the difference in electrical resistance that is measured across the conductive structure provides several insights into the true state of the conductive structure. Upon exposing the conductive structure to air, the resistance measured changes a first time. Upon damaging some of the fibers making up the wires or stripes, the measured resistance continues increasing until a full destruction of the wires leads to an excessively high resistance value.

According to an embodiment, the first electrically conductive pattern and/or the second electrically conductive pattern is made of at least one electrically conductive material among: a carbon fabric, glass fabric coated with conductive material, conductive carbon, a conductive carbon nanostructure, a metallic conductive filler, a silver coated nanoparticle a gold coated nanoparticle, a nickel coated nanoparticle, a nickel wire, a copper wire, a gold wire.

According to an embodiment, the first electrically conductive pattern or the second electrically conductive pattern comprise at least one electrically conductive structure type selected among : a set of parallel conductive wires, a set of parallel stripes, a set of parallel stripes each comprising a set of parallel conductive wires; and
wherein the at least one electrically conductive structure type comprises electrically conductive structures oriented along at least two different directions.

The arrangement of two sets of electrically conductive structures that are oriented along at least two different directions allows a precise identification of the location of the degradation of the protective coating. Indeed, when two different conductive structures intersect (advantageously though without establishing a conductive contact at their intersection point), the change in electrical resistance measured due to an erosion at or in the vicinity of the intersection point is measured at each of the two conductive structures. A user then can identify the location of the damage to the protective coating as being located at or in the vicinity of the intersection point of the two conductive structures.

According to an embodiment, the first electrically conductive pattern and the second electrically conductive pattern comprise at least one electrically conductive structure type selected among : a set of parallel conductive wires, a set of parallel stripes, a set of parallel stripes each comprising a set of parallel conductive wires; and
wherein the electrically conductive structure type of the first electrically conductive pattern comprises electrically conductive structures oriented along a first direction that differs from a second direction of electrically conductive structures of the second electrically conductive pattern.

According to an embodiment, the resistance measurement device is configured to electrically connect to each of the at least one electrically conductive structure types.

According to an embodiment, at least one among the lower coating portion and the first upper coating portion comprises a ceramic filled epoxy, polyurethane, a vinyl ester, an unsaturated polyester.

The invention further pertains to a method for detecting a degradation in a protective coating, the protective coating comprising:
- a lower coating portion, configured to be arranged on a substrate to be coated;
- a first upper coating portion arranged on the lower coating portion;
- a first electrically conductive pattern arranged inside the protective coating between the lower coating potion and the first upper coating portion;
wherein the method further comprises :
electrically connecting a resistance measurement device with the first electrically conductive pattern and measuring the resistance across the first electrically conductive pattern, wherein a degradation of the first upper coating portion that exposes at least a portion of the first electrically conductive pattern is detected in the form of a change in the resistance measured across the first electrically conductive pattern.

According to an embodiment, when the first electrically conductive pattern comprises at least two electrically conductive structures of an electrically conductive structure type selected among : a set of parallel conductive wires, a set of parallel stripes, a set of parallel stripes each comprising a set of parallel conductive wires, the method further comprises :
- Connecting the resistance measurement device to each end of the at least two electrically conductive structures;
- Determining a location of an erosion of the protective coating based on an identification of the electrically conductive structure across which a change of electrical resistance is measured.

According to an embodiment, when the first electrically conductive pattern or a second electrically conductive pattern arranged between the first upper coating portion and a second upper coating portion comprise at least one electrically conductive structure type selected among : a set of parallel conductive wires, a set of parallel stripes, a set of parallel stripes each comprising a set of parallel conductive wires; wherein the at least one electrically conductive structure type comprises electrically conductive structures oriented along at least two different directions, the method further comprises :
- Connecting the resistance measurement device to each end of the electrically conductive structures;
- Determining a location of an erosion of the protective coating based on an identification of a combination of electrically conductive structures across which a change of electrical resistance is measured.

According to an embodiment, when the protective coating further comprises a second electrically conductive pattern arranged between the first upper coating portion and a second upper coating portion, the method further comprises :
- recording a first time when a change in the resistance across a first electrically conductive structure of the second electrically conductive pattern indicates an exposure of said first electrically conductive structure;
- recording a second time when a change in the resistance across a second electrically conductive structure of the first electrically conductive patterns indicates an exposure of said second electrically conductive structure;
- determining, based on the thickness of the first upper coating portion, and a time difference between the second time and the first time, a remaining time before the coated surface becomes exposed.

This approach is particularly interesting because it enables a prediction of the remaining time before a full erosion of the protective coating (at least locally). Being in possession of such a remaining time allows a user to plan accordingly the best possible intervention to repair the currently damaged protective coating.

According to an embodiment, when the protective coating further comprises a second electrically conductive pattern arranged between the first upper coating portion and a second upper coating portion, the method further comprises :
- recording a first time when a change in the resistance across a first electrically conductive structure of the second electrically conductive pattern indicates an exposure of said first electrically conductive structure;
- recording a second time when a change in the resistance across a second electrically conductive structure of the first electrically conductive patterns indicates an exposure of said second electrically conductive structure;
- determining, based on a time difference between the second time and the first time, a type of the degradation affecting the protective coating.

The speed at which a protective coating is damaged can be related to a type of erosion or damage process. Based on the speed of this progression one could for example discriminate between an erosion due to oxidation, to the presence of an acid or alkali, a mechanical degradation due to the formation of cracks, a peeling of the protective coating due to friction exerted on the protective coating. The speed signature of these processes may be known and stored in a database which is accessed to compare the recorded time difference measured in the method of the invention to the information stored in the database.

According to an embodiment, the method further comprises :
- Identifying the occurrence of a degradation of the protective coating by measuring a change in resistance across the first electrically conductive pattern;
applying an upper coating material to repair damage of the first upper coating portion.

### BRIEF DESRIPTION OF THE DRAWINGS

The present disclosure will hereinafter be described in conjunction with the following drawing figures, wherein like numerals denote like elements, and:
Fig. 1 is a schematic representation of a system according to an exemplary embodiment;
Fig. 2 is a schematic representation of a system according to an exemplary embodiment subject to erosion;
Fig. 3 is a graphical representation of the evolution over time of the resistance measured across a resistance measurement device in an embodiment;
Fig. 4 is a schematic representation of an exemplary embodiment of a system of the invention as seen from above;
Fig. 5 is a schematic representation of an exemplary embodiment of a system of the invention as seen from above, subject to erosion;
Fig. 6 is a schematic representation of a system according to another exemplary embodiment;
Fig. 7 is a schematic representation of a system according to another exemplary embodiment subject to erosion;
Fig. 8 is a schematic representation of another exemplary embodiment of a system of the invention as seen from above, subject to erosion;
Fig. 9 is a flowchart showing steps of a method according to an exemplary embodiment.

### DETAILED DESCRIPTION

The invention pertains to a system designed to warn users of the occurrence of a degradation of the protective coating of, for example, an industrial asset on which the protective coating is placed. Typically, protective coatings are made of ceramic-filled epoxy material, which, like any other material are subject to wear and tear. Some degradation can be due to heat, mechanical stress or strain, corrosive environments, material aging, frictional stress, erosion, oxidation or any other constraint that the protective coating is subjected to as it ages.

Unlike sensors that are capable of detecting local degradation or leaks, the system of the invention is particularly suited for detecting issues with a protective coating over an extended surface at low costs.

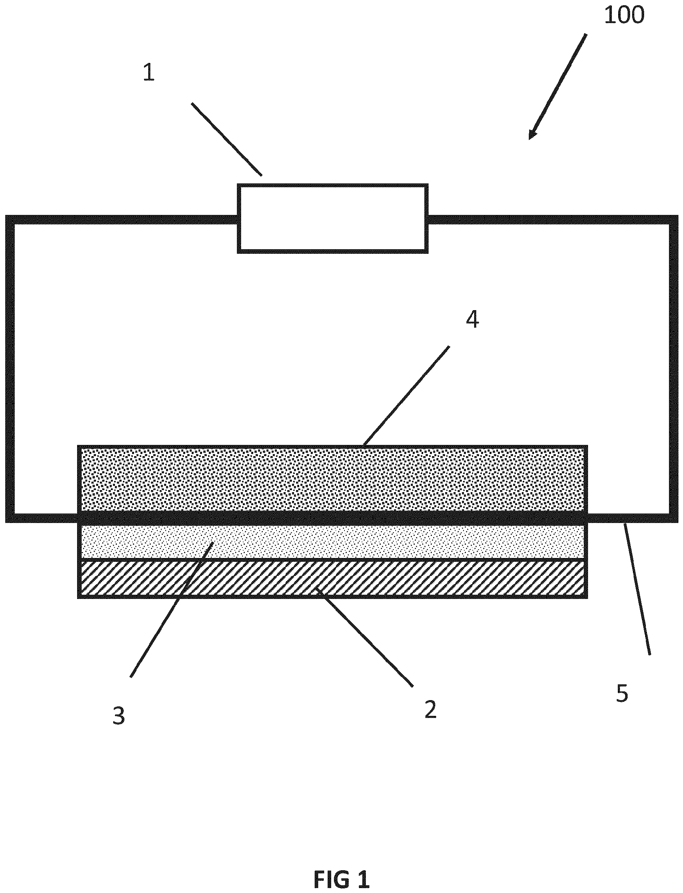

Figure 1 provides a schematic representation in two dimensions seen from the side of a system 100 according to an embodiment of the invention. The system 100 comprises a substrate 2, which may typically be the outermost surface of an industrial asset such as a pipe, flange, tank, valve, pump, wall, steam trap, bolt or any other object that would benefit from being regularly monitored. On top of the substrate 2, a lower coating portion 3 is arranged which protects the substrate 2. The lower coating portion 3 can typically be made of a ceramic-filled epoxy. The thickness of this lower coating portion 3 can typically be comprised between 100 micrometers to 10 millimeters.

On top of the lower coating portion 3 a first electrically conductive pattern 5 is arranged. The electrically conductive pattern can typically be a conductive surface, a conductive wire, a conductive stripe, a set of parallel conductive wires, a set of parallel conductive stripes, a set of parallel stripes each comprising a set of parallel conductive wires. Each wire or stripe can be typically made of several conductive fibers so that upon damaging one fiber an electrical current may still flow through the first electrically conductive pattern 5 but that damage may be detected by a change (in particular an increase) in the electrical resistance across the first electrically conductive pattern 5.

The first electrically conductive pattern 5 is integrated between the lower coating portion 3 and a first upper coating portion 4. The lower coating portion 3 and the first upper coating portion 4 may be made of the same material or of a different material. In essence, the first upper coating portion 4 and the lower coating portion 3 may form one object in continuity of matter and encase or encompass within the structure of that single layer the first electrically conductive pattern 5. Typically the thickness of the first upper coating portion 4 may be comprised between 100 micrometers and 10 millimeters similarly to the thickness of the lower coating portion 3.

The lower coating portion 3 and the first upper coating portion 4 may for example be made of any material or material combination comprising a ceramic-filled epoxy, polyurethane, vinyl esters or unsaturated polyesters.

The system 100 further comprises a resistance measurement device 1 that is electrically connected to the first electrically conductive pattern 5, The resistance measurement device 1 is typically a resistor and may further comprise an appropriate power source to make a measurement of the electrical resistance across the first electrically conductive pattern 5.

The resistance measurement device 1 may typically make continuous measurements of the resistance across the first electrically conductive pattern 5 or make sampled measurements at regular or irregular time intervals. For example, based on the type of expected degradation and aging speed of the protective coating, a measurement of the resistance across the first electrically conductive pattern 5 can be made every second, every minute, every hour, every day, every week or every month. The rate at which measurements are made may also be dependent on a detected change with respect to the value measured at a previous measurement of that resistance. For example, if the measurement resistance remains constant, the time interval between two measurements may be increased, and for example occur once a week or once a day. If a change in the measured resistance is detected, then the frequency of the measurements may advantageously be increased and for example occur every hour, every minute or every second. The initial frequency of the resistance measurements may be determined based on a typically expected first failure or degradation occurrence for that type of protective coating, and optionally further based on the type of asset on which the protective coating is placed.

Although not represented on the figures, the resistance measurement unit 1 can typically also comprise a power source such as a battery or be connected to a processor and storage device in order to record and process the resistance values that are measure and decide on the frequency of the measurements. A user interface may further also be provided to allow a user to access the information or input further conditions on how the monitoring should occur.

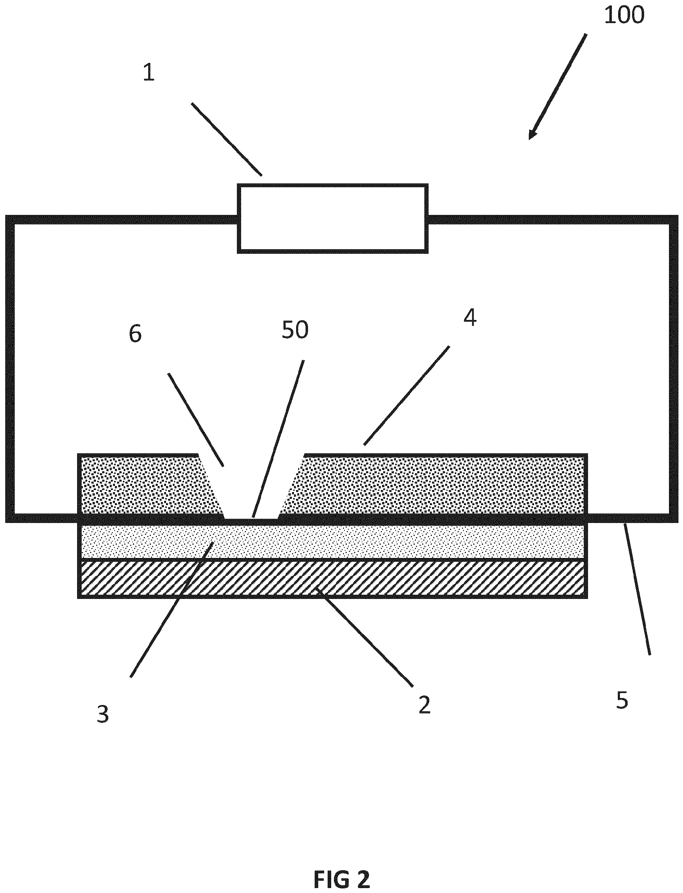

Figure 2 illustrates the system 100 of figure 1 but after a degradation such as an erosion has damaged the first upper coating portion 4. The degradation leaves an empty area 6 in the first upper coating portion 4 and exposes a portion 50 of the first electrically conductive pattern 5. As mentioned above, the structures composing the first electrically conductive pattern 5 may comprise wires, stripes or sets of wires, stripes. Each wire or stripe may further be made of individual conductive fibers that are arranged parallel to each other or in a twisted manner to form the wire or stripe. Upon exposure to the outside condition as illustrated by portion 50 on figure 2, the electrical resistance measured across the resistance measurement device 1 changes, and typically increases. Indeed, the exposure of portion 50 locally alters the environment around the electrically conductive structures of the first electrically conductive pattern 5. This alone can influence the resistance that is measured, for example if the conductive structures are exposed to moisture, because some of the insulating coating that may be found around the conductive structures is damaged. In the event that some conductive fibers of the wires or stripes, or some of the wires or stripes are damaged or ruptured, the value measured across the resistance measurement device 1 increases noticeably.

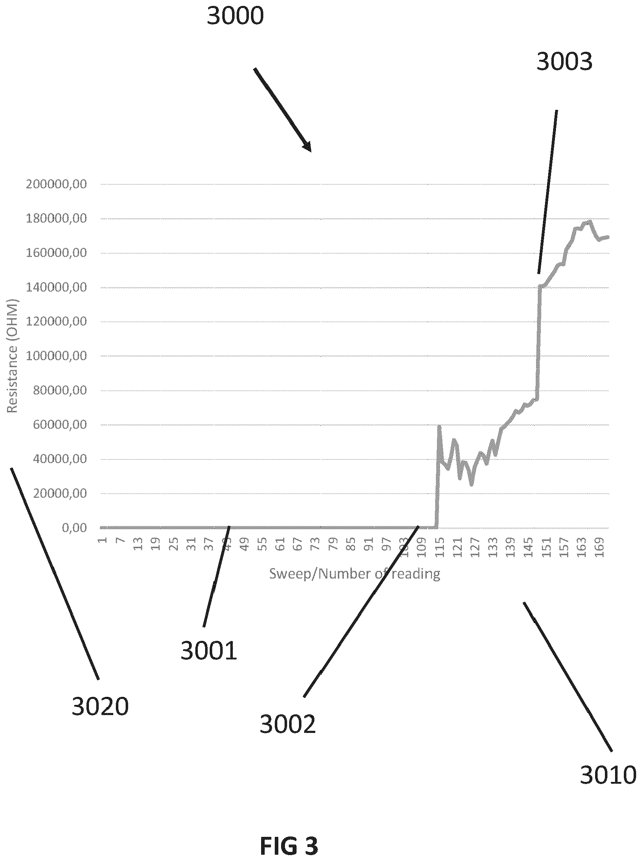

Figure 3 is a graph 3000 illustrating the evolution over time of the electrical resistance measured by a resistance measurement device 1. Time is represented on a horizontal axis 3010 by the cardinal of the number of the measurement that is made. The resistance value is illustrated in Ohms on a vertical axis 3020. As can be seen on the graph 3000 of figure 3 in the first portion 3001 of that graph 3000, the measured resistance is particularly low when the protective coating and system 100 as a whole are intact. This remains the case until at least one portion 50 of the first electrically conductive pattern 5 is exposed to the outside environment because of the degradation of the upper coating portion 4. Upon exposure, the resistance measured across the resistance measurement device 1 increases abruptly on the second portion 3002 of graph 3000. This increase can typically be due to the deterioration of exposure to air of some conductive material forming the first electrically conductive pattern 5. As more fibers of the conductive structures in the first electrically conductive pattern 5 are damaged, the resistance increases as can be seen by the step-wise fluctuation 3003 and abrupt increases in resistance measured and represented on graph 3000. When the conductive structure across which a measurement of a resistance is made is fully ruptured by the deterioration to which the protective coating is subject, the measured electrical resistance reaches a final threshold value, corresponding to the maximum measurable resistance with the resistance measurement device 1.

Depending on how many resistances are used in the resistance measurement device 1 and on how many conductive structures are formed in the first electrically conductive pattern 5, the step-wise increase in resistance noticed on the graph 3000 of figure 3 may correspond either to the deterioration of fibers in a wire or stripe, or to the breakage of a whole wire or stripe. For example, if the electrically conductive pattern 5 is formed on a single wire made of individual fibers, the step-wise increase in resistance can be attributable to the progressive breakage of fibers in the wire as the system 100 is subject to deterioration. If the first electrically conductive pattern 5 is made of several wires, arranged with some spacing between the wires, and all connected to one resistance, then the step-wise increase in resistance can be attributable to the progressive breakage of individual wires or stripes as the system 100 is subject to deterioration.

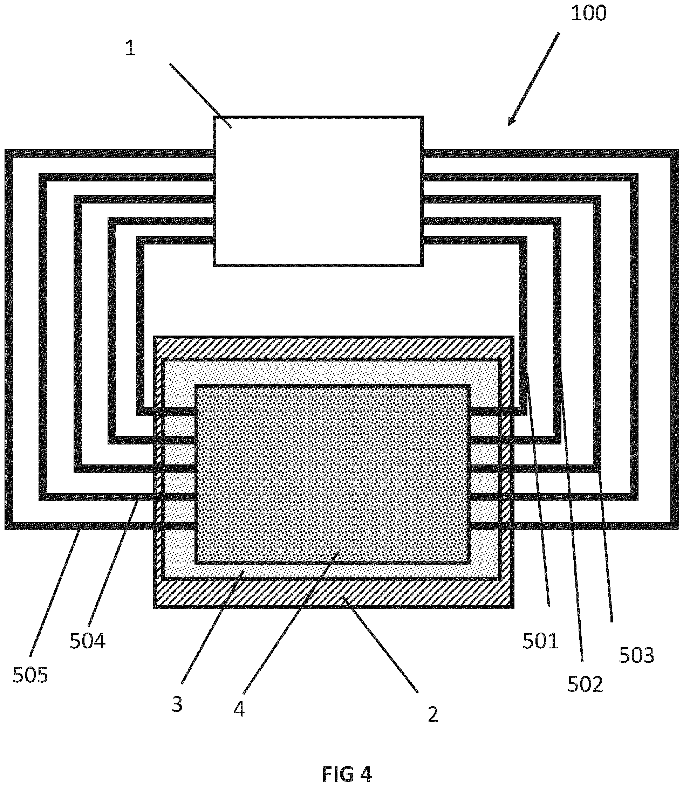

Figure 4 is a schematic representation of a system 100 seen from above in a two-dimensional representation. The first electrically conductive pattern 5 is made on figure 4 of a plurality of wires 501, 502, 503, 504, 505 arranged in a parallel fashion and integrated into the structure of the protective coating, arranged between the lower coating portion 3 and the first upper coating portion 4 as already described above. Figure 4 illustrates that the system 100 of the invention enables a localization of the damage caused to the system 100 since a local damage will only expose some of the conductive structures (one or more of the wires 501-505 on figure 4), which will enable a user to easily identify where a maintenance action would be required.

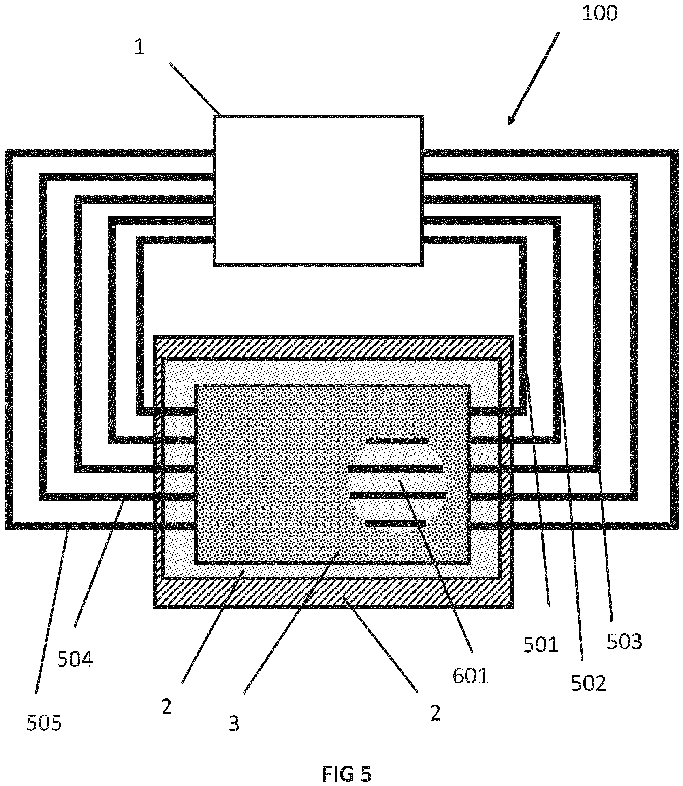

This possibility to locate the degradation that affects the protective coating of the system can be seen on figure 5 which is an example of the system 100 of figure 4 after a damage 601 exposed some portions of the wires 502, 503, 504, 505 of the system 100. This exposure affects each of the resistances measured across wires 502-505 proportionally to the extent of the exposure and damage that affects these wires. Therefore, a person knows along which wires to look for the damage and plan repair actions accordingly. Although not represented on figure 5, it is also possible that the resistance measurement device 1 is composed of a multitude of independent resistances each one associated to each of the wires 501-505.

It is to be noted that the conductive structures of the first electrically conductive pattern 5 can be made of any conductive material. According to preferred embodiments, a carbon fabric is preferred as it represents a convenient indicator of the extent of the damage due to the exposure to the environment of the first electrically conductive pattern 5. Indeed carbon fabric can typically decay progressively upon such an exposure. Alternatively to carbon fabric other materials can be used in the conductive structures of the first electrically conductive pattern 5 such as for example glass fabric, in particular glass fabric coated with conductive material, conductive carbon structures such as conductive carbon nanotubes, conductive carbon nanoparticles, glass fabric coated with metallic conductive fillers such as silver, copper, gold, nickel.

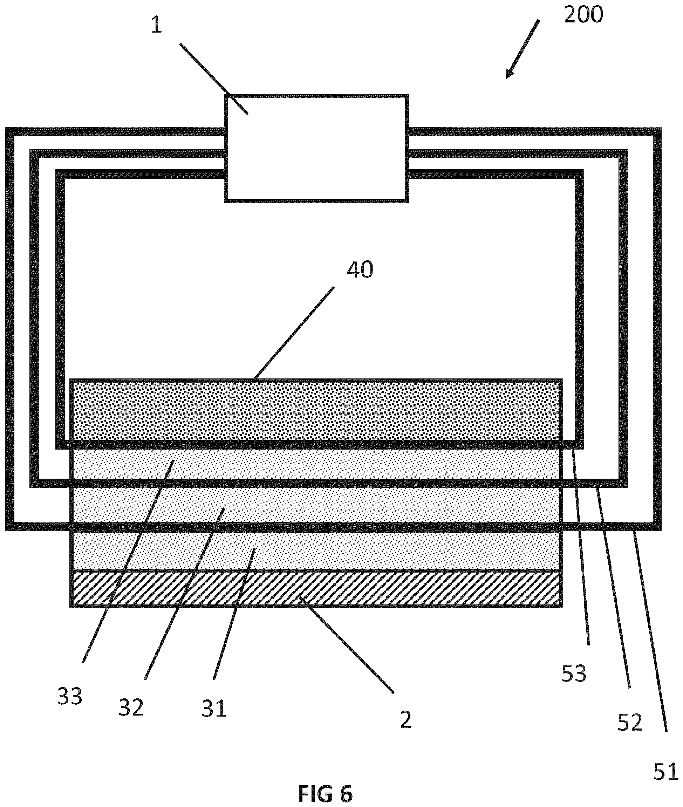

The embodiments described above can be further enhanced by using more than one electrically conductive pattern. Figure 6 shows one such embodiment in which three different electrically conductive patterns 51, 52, 53 are stacked. Figure 6 shows a system 200 according to an embodiment in a two dimensional cut as seen from the side. On top of the substrate 2 a lower coating portion 31 is seen. A first electrically conductive pattern 51 is arranged on top of the lower coating portion 31. A first upper coating portion 32 is arranged on the first electrically conductive pattern 51. A second electrically conductive pattern 52 is arranged on top of the first upper coating portion 32. A second upper coating portion 33 is arranged on the second electrically conductive pattern 52. A third electrically conductive pattern 53 is arranged on the second upper coating portion 33. A last upper coating portion 40 is arranged on the third electrically conductive pattern 53.

The advantage of this multilayer structure is that the progression of the damage through the protective coating can be more precisely monitored. In particular such a construction enables a timing of this progression and an estimation of the speed at which damage affects the protective coating. When the last upper coating portion 40 is damaged to the extent that the resistance measured across the third electrically conductive pattern 53 changes, a user can be warned that substantial damage is on-going on the system 200 and that a repair step should be planned. Then, depending on the speed at which a change of the resistance is measured in the second electrically conductive pattern 52, it is possible to predict a rate of progression of the damage, a seriousness of the condition affecting the system 200 and plan the best and most appropriate repair steps.

One could for example use information that is collected in such a structure to identify the type of degradation that affects the protective coating. A very fast progression of damage might for example be the signature of a mechanical constraint affecting the protective coating such as cracks. It could also be the sign of temperature induced cracks. Erosion might typically be slower and the type of erosion may also differ in the progression speed. Acid induced erosion will for example depend on the aggressiveness of the hazard that destroys the protective coating. The timing of this progression through the protective coating therefore enables to understand some properties of the cause of the damage and therefore plan the most appropriate repair strategy. For example if there is a temperature condition affecting the protective coating, one might repair the system 200 and add a more suitable temperature resistant coating material to prevent similar degradation in the future. Other examples can typically be easily extrapolated for acid damage, oxidation damage, mechanical stress or strain, friction damage.

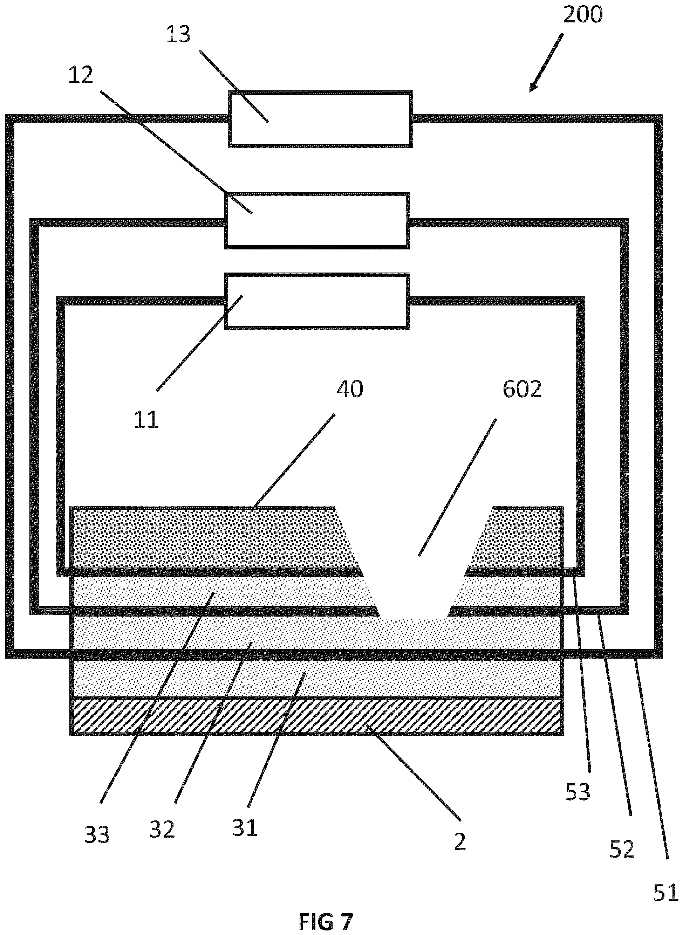

Figure 7 is a schematic illustration of a modified version of the system 200 of figure 6 in which more than one resistance measurement device 11, 12, 13 is present. Each resistance measurement device is connected to a respective electrically conductive pattern 51, 52, 53. This illustration highlights that the times at which changes in resistance are identified can be stored and compared to the times recorded at neighbouring resistance measurement devices 11, 12, 13. A control device (not represented) may then comprise a processor or other computing means to process this information and further for example compare it to information stored in a database to determine the type of damage and/or estimate the speed of its progression through the protective coating and/or estimate a time at which the asset protected by the protective coating will be at risk of failure or malfunction due to the damage.

Figure 7 also schematically illustrates a damage 602 propagating through the last upper coating portion 40, a portion of the third electrically conductive pattern 53 the third upper coating portion 33 and a portion of the second electrically conductive pattern 52.

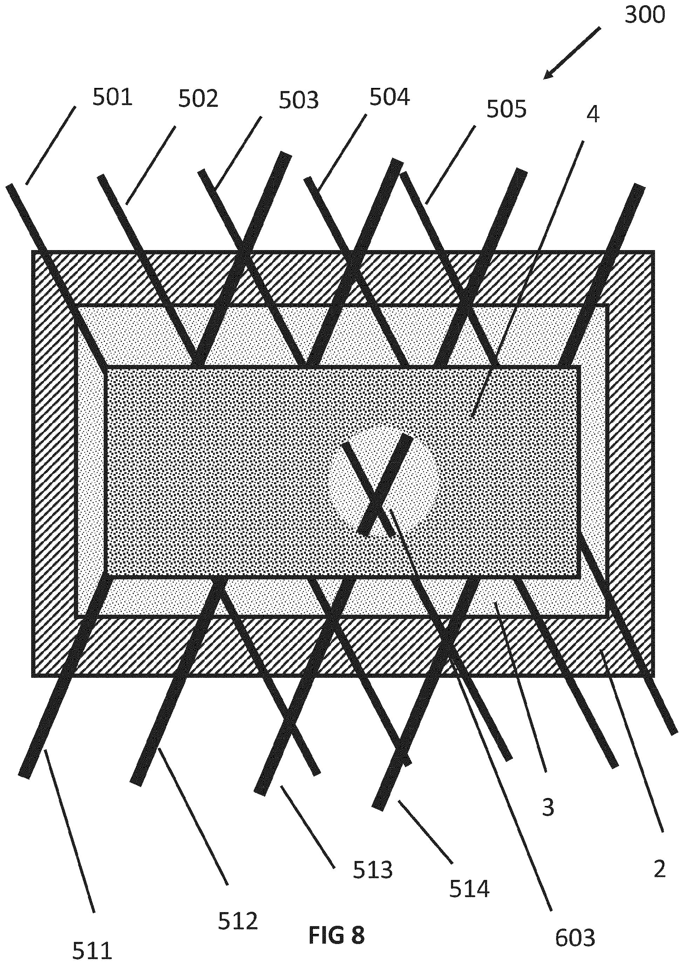

According to embodiments such as the one illustrated on figure 8, the system 300 of the invention can be further improved by using a first electrically conductive pattern 5 or more than on electrically conductive pattern that comprise lines or stripes or surfaces that are oriented according to different directions in order to cross in certain points in the protective coating.

As illustrated on figure 8, an electrically conductive pattern may be comprised, in substantially the same plane, of lines or stripes that intersect. This is illustrated by a first set of substantially parallel wires or stripes 501-505 that are oriented along a direction that differs from a direction of orientation of a second set of substantially parallel wires or stripes 511-514. To avoid electrical shorts at the intersection points between crossing lines or stripes, the electrically conductive structures can be embedded in an electrically insulating sheath.

By arranging electrically conductive structures that are oriented along different directions and that intersect, it is possible to better identify the location of a degradation of the protective coating by identifying the combination of electrically conductive structures across which a change is resistance is measured. The mesh formed by the intersecting electrically conductive structures can be designed so as to control the precision with which such a degradation can be detected.

According to an alternative embodiment, it is possible that the electrically conductive structures of a first electrically conductive pattern, in the form of substantially parallel wires or stripes are oriented according to a first direction in a first plane; whereas the electrically conductive structures of a second electrically conductive pattern, in the form of substantially parallel wires or stripes are oriented according to a second direction different from the first direction in a second plane differing from the first plane. In this alternative arrangement the wires or stripes may not be protected by an insulating sheath and the localization of a degradation can occur when the damage progresses through the first electrically conductive pattern to the second electrically conductive pattern.

Alternatively it is possible to comprise several layers of meshed electrically conductive patterns each pattern being made in the same layer of intersection wires or stripes.

As seen on figure 8, a damage 603 can for example overlap with an intersection between two electrically conductive wires 503 and 513. The change in the resistance measured across wires 503 and 513 indicates that the damage 603 is located at the intersection or close to the intersection between these two wires.

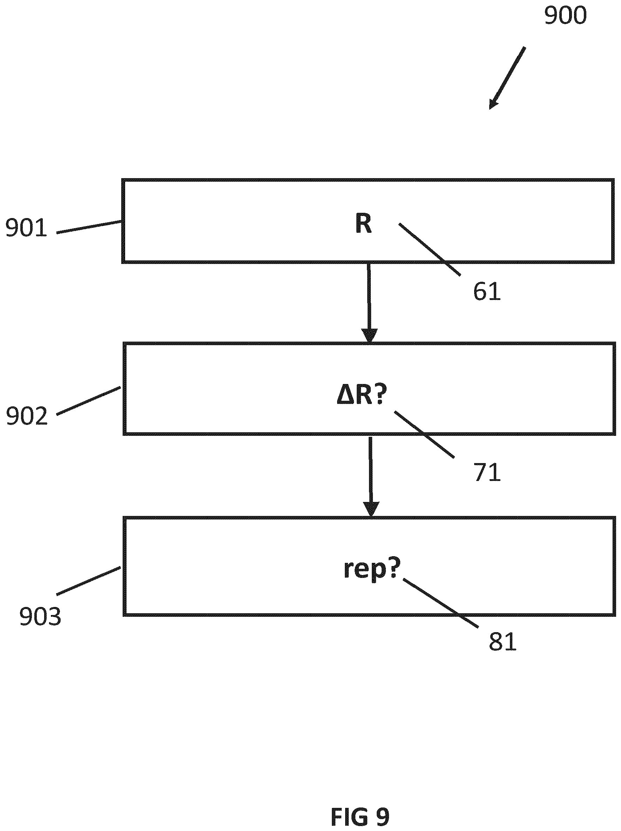

The system 100, 200, 300 described above typically implements a degradation detection method 900 as illustrated on the flowchart of figure 9. At a first step 901, when the first electrically conductive structure 5 is connected to a resistance measurement device 1, the resistance 61 across the resistance measurement device 1 is measured. The frequency of this measurement can be set according to different criteria as already discussed above. When a change 71 in the measured resistance is observed at a second step 902, it is determined that the protective coating is damaged and may require repairing. As already discussed above, the system 100, 200, 300 may enable a precise identification of the location at which this change 71 in resistance is measured in order to plan repair actions. At a third step 903, the method typically comprises repair 81 actions. Based on the nature of the damage and/or its location and/or the extent of that damage and/or the speed of propagation of that damage, the appropriate repair steps are selected and implemented.

Among possible repair steps one could for example fill the void left by the damage by a new undamaged set of electrically conductive patterns or add an additional coating that is suitable for protecting the protective coating from the type of hazard that caused the initial damage. In this way, the method 900 may improve the condition of the protective coating over time.

The system 100, 200, 300 described above can therefore conveniently inform a user of the occurrence of a damage on a protective coating to plan appropriate repair action before a substantial damage affects an asset. As discussed above, the system and method of the invention can allow an identification of the location of the damage in all three dimensions.

While at least one exemplary embodiment has been presented in the foregoing detailed description, it should be appreciated that a vast number of variations exist. It should also be appreciated that the exemplary embodiment or exemplary embodiments are only examples, and are not intended to limit the scope, applicability, or configuration of the various embodiments in any way. Rather, the foregoing detailed description will provide those skilled in the art with a convenient road map for implementing an exemplary embodiment as contemplated herein. It being understood that various changes may be made in the function and arrangement of elements described in an exemplary embodiment without departing from the scope of the various embodiments as set forth in the appended claims.

## Claims

1. A system (100, 200, 300) configured for detecting a degradation in a protective coating comprised in the system (100, 200, 300), the protective coating comprising:
- a lower coating portion (3), configured to be arranged on a substrate (2) to be coated;
- a first upper coating portion (4) arranged on the lower coating portion (3);
- a first electrically conductive pattern (5) arranged inside the protective coating between the lower coating potion (3) and the first upper coating portion (4);
wherein the system (100, 200, 300) further comprises a resistance measurement device (1) configured to electrically connect with the first electrically conductive pattern (5) to measure the resistance across the first electrically conductive pattern (5), wherein a degradation of the first upper coating portion (4) that exposes at least a portion of the first electrically conductive pattern (5) is detected in the form of a change in the resistance measured across the first electrically conductive pattern (5).

2. The system (100, 200, 300) according to claim 1, wherein the protective coating further comprises:
- a second upper coating portion (33) arranged on the first upper coating portion;
- a second electrically conductive pattern (52) arranged between the first upper coating portion (3, 32) and the second upper coating portion (33).

3. The system (100, 200, 300) according to claim 2, wherein the first electrically conductive pattern (5, 51) and/or the second electrically conductive pattern (52) comprise at least one electrically conductive structure type selected among : a conductive surface, a conductive wire, a conductive stripe, a set of parallel conductive wires, a set of parallel conductive stripes, a set of parallel stripes each comprising a set of parallel conductive wires.

4. The system (100, 200, 300) according to any one of the preceding claims, wherein the first electrically conductive pattern (5, 51) and/or the second electrically conductive pattern (52) is made of at least one electrically conductive material among: a carbon fabric, glass fabric coated with conductive material, conductive carbon, a conductive carbon nanostructure, a metallic conductive filler, a silver coated nanoparticle a gold coated nanoparticle, a nickel coated nanoparticle, a nickel wire, a copper wire, a gold wire.

5. The system (100, 200, 300) according to any one of the preceding claims wherein the first electrically conductive pattern (5, 51) or the second electrically conductive pattern (52) comprise at least one electrically conductive structure type selected among : a set of parallel conductive wires, a set of parallel stripes, a set of parallel stripes each comprising a set of parallel conductive wires;
and wherein the at least one electrically conductive structure type comprises electrically conductive structures oriented along at least two different directions.

6. The system according to any one of claims 2 to 4, wherein the first electrically conductive pattern (5, 51) and the second electrically conductive pattern (52) comprise at least one electrically conductive structure type selected among : a set of parallel conductive wires, a set of parallel stripes, a set of parallel stripes each comprising a set of parallel conductive wires;
and wherein the electrically conductive structure type of the first electrically conductive pattern (5, 51) comprises electrically conductive structures oriented along a first direction that differs from a second direction of electrically conductive structures of the second electrically conductive pattern (52).

7. The system (100, 200, 300) according to any one of claims 3 to 6, wherein the resistance measurement device (1) is configured to electrically connect to each of the at least one electrically conductive structure types.

8. The system (100, 200, 300) according to any one of the preceding claims, wherein at least one among the lower coating portion (3) and the first upper coating portion (4) comprises at least one among : a ceramic filled epoxy, polyurethane, a vinyl ester, an unsaturated polyester.

9. A method (900) for detecting a degradation in a protective coating, the protective coating comprising:
- a lower coating portion (3), configured to be arranged on a substrate (2) to be coated;
- a first upper coating portion (4) arranged on the lower coating portion (3);
- a first electrically conductive pattern (5, 51) arranged inside the protective coating between the lower coating potion (3) and the first upper coating portion (4);
wherein the method (900) further comprises :
electrically connecting a resistance measurement device (1) with the first electrically conductive pattern (5, 51) and measuring the resistance (61) across the first electrically conductive pattern (5, 51), wherein a degradation of the first upper coating portion (4) that exposes at least a portion of the first electrically conductive pattern (5, 51) is detected in the form of a change (71) in the resistance measured across the first electrically conductive pattern (5, 51).

10. The method (900) according to claim 9, wherein the first electrically conductive pattern (5, 51) comprises at least two electrically conductive structures of an electrically conductive structure type selected among : a set of parallel conductive wires, a set of parallel stripes, a set of parallel stripes each comprising a set of parallel conductive wires, the method further comprising :
- Connecting the resistance measurement device (1) to each end of the at least two electrically conductive structures;
- Determining a location of an erosion of the protective coating based on an identification of the electrically conductive structure across which a change (71) of electrical resistance is measured.

11. The method (900) according to any one of claims 9 or 10, wherein the first electrically conductive pattern (5, 51) or a second electrically conductive pattern (52) arranged between the first upper coating portion (4, 32) and a second upper coating portion (33) comprise at least one electrically conductive structure type selected among : a set of parallel conductive wires, a set of parallel stripes, a set of parallel stripes each comprising a set of parallel conductive wires; wherein the at least one electrically conductive structure type comprises electrically conductive structures oriented along at least two different directions, the method (900) further comprising :
- Connecting the resistance measurement device (1) to each end of the electrically conductive structures;
- Determining a location of an erosion of the protective coating based on an identification of a combination of electrically conductive structures across which a change (71) of electrical resistance is measured.

12. The method (900) according to any one of claims 9 to 11, wherein the protective coating further comprises a second electrically conductive pattern (52) arranged between the first upper coating portion (4, 32) and a second upper coating portion (33), the method (900) further comprising :
- Recording a first time when a change (71) in the resistance across a first electrically conductive structure of the second electrically conductive pattern (33) indicates an exposure of said first electrically conductive structure;
- Recording a second time when a change (71) in the resistance across a second electrically conductive structure of the first electrically conductive pattern (5, 51) indicates an exposure of said second electrically conductive structure;
- Determining, based on the thickness of the first upper coating portion (32), and a time difference between the second time and the first time, a remaining time before the substrate (2) becomes exposed.

13. The method (900) according to any one of claims 9 to 12, wherein the protective coating further comprises a second electrically conductive pattern (52) arranged between the first upper coating portion (32) and a second upper coating portion (33), the method further comprising :
- Recording a first time when a change (71) in the resistance across a first electrically conductive structure of the second electrically conductive pattern (52) indicates an exposure of said first electrically conductive structure;
- Recording a second time when a change (71) in the resistance across a second electrically conductive structure of the first electrically conductive pattern (5, 51) indicates an exposure of said second electrically conductive structure;
- Determining, based on a time difference between the second time and the first time, a type of the degradation affecting the protective coating.

14. The method (900) according to any one of claims 9 to 13, further comprising :
- Identifying the occurrence of a degradation of the protective coating by measuring a change (71) in resistance across the first electrically conductive pattern (5, 51);
- Applying an upper coating material to repair damage of the first upper coating portion (4, 32).
